# EUROPEAN PATENT APPLICATION

(11) **EP 3 988 481 A1**
(43) Date of publication of application: **27.04.2022**
(21) Application number: 21180929.8
(22) Date of filing: 22.06.2021
(51) Int. Cl.: B65G 49/06

(54) **LOADING AND FEEDING MACHINE FOR GLASS SHEETS AND THE LIKE**

(30) Priority: 20.10.2020 IT 202000024670
(71) Applicant: Macotec S.R.L., 23010 Rogolo, (SO) (IT)
(72) Inventor: COLLI, Maurizio, 23019 TRAONA SO (IT); BRIGNONE, Gianluca, 23823 COLICO LC (IT)
(74) Representative: Modiano, Micaela Nadia

(57) **Abstract**

A loading and feeding machine (10), particularly for glass sheets and the like, comprising a pair of tracks (1) adapted to be arranged on the floor for the translation of the machine, a footing (2) adapted to translate along an axis that coincides with the tracks (1) and is provided with a roller conveyor (4) for the transfer of a sheet (15); and a lateral telescopic oscillating structure (5), provided with means for gripping a glass sheet, rotation means (3) being interposed between the footing (2) and the roller conveyor (4) and being adapted to allow a rotation of the roller conveyor (4) with respect to the footing (2) according to any angular orientation. (Figure 1)

## Description

The present invention relates to a loading and feeding machine for glass sheets and the like.

As is known, for the handling of glass sheets there are commercially available machines which serve the dual functions of loading the glass sheet and of presenting it to the cutting assembly.

In general, known machines have a pair of floor tracks which allow the translation of the machine on said floor, a footing for translation along an axis that coincides with the tracks and a roller conveyor for the transfer of the sheet once it has been loaded on the footing.

The machine is completed by a lateral telescopic oscillating structure that makes it possible to move the sheet away from the footing, in a cantilevered arrangement, to take it to the cutting assembly.

The telescopic oscillating structure is provided with assemblies for gripping the sheet, provided with arms provided with suckers connected to a vacuum system so that the suckers adhere to the surface of the glass sheet to be handled.

Machines of the known type differ in the technical solution used to perform the extraction of the grip arm, i.e., the movement of the arm with respect to the footing of the machine.

The extraction of the arm can occur either at the lower part of the arm, i.e., the telescopic part of the arm arranged below the fixed part of the arm, or the extraction can be provided in the upper part of the arm, with the telescopic part therefore arranged in an upper region with respect to said arm.

The solutions proposed above however have drawbacks.

In particular, the configuration of the machine structure itself (single telescopic arm which is external and lateral to the translation footing) entails that it is necessary to provide such a footprint of the machine that an area may be created in which it is impossible to load the glass sheet, or to occupy additional space inside the building in which the machine is housed.

If the sheet cutting and handling system were to be extended over multiple spans inside the building, this would be possible only if the clearance between the pillars of the building allow the passage of said machine, or the passage of the sheet with the maximum loadable sheet width.

Furthermore, machines of the known type allow transferring the sheet on one or more cutting lines the working direction of which is solely and exclusively at right angles to the translation axis of the sheet loading machine, i.e., the axis that coincides with the extension of the tracks.

Furthermore, there are feeding-only machines, i.e., machines that are designed only to handle the sheet between automatic devices for loading on one or more cutting lines. Said machines translate on tracks and are formed by a footing and a roller conveyor which are decoupled and can rotate with respect to each other.

The roller conveyor part can oscillate from the horizontal position to the vertical position and vice versa, but does not move laterally and is not provided with glass grip means, i.e., suckers with vacuum system.

These machines are applied in systems that extend over multiple spans and in which the clearance between the pillars would not allow the passage of a machine without the rotational possibility of the roller conveyor.

The aim of the present invention is to provide a loading and feeding machine for glass sheets and the like that makes it possible to optimize spaces on the ground, filling all the area assigned to storage, with glass stations that can be loaded automatically, without occupying additional spaces for positioning the machine body.

Within this aim, an object of the present invention is to provide a loading and feeding machine for glass sheets and the like that can be translated from one span to another of a factory even when the clearance between the pillars that are present is smaller than the machine width or than the maximum workable sheet width.

Another object of the present invention is to provide a loading and feeding machine for glass sheets and the like that makes it possible to transfer the sheet onto one or more cutting lines having a working direction that is not necessarily at right angles to the rotation axis of said machine.

Not the least object of the present invention is to provide a loading and feeding machine for glass sheets and the like that is highly reliable, relatively easy to provide and has competitive costs.

This aim and these and other objects which will become more apparent hereinafter are achieved by a loading and feeding machine, particularly for glass sheets and the like, comprising a pair of tracks adapted to be arranged on the floor for the translation of the machine, a footing adapted to translate along an axis that coincides with the tracks and provided with a roller conveyor for the transfer of a sheet; and a lateral telescopic oscillating structure, provided with sheet grip means, characterized in that it comprises rotation means interposed between the footing and the roller conveyor and adapted to allow a rotation of the roller conveyor with respect to the footing according to any angular orientation.

Further characteristics and advantages of the invention will become more apparent from a loading and feeding machine according to the invention, illustrated by way of non-limiting example in the accompanying drawings, wherein:

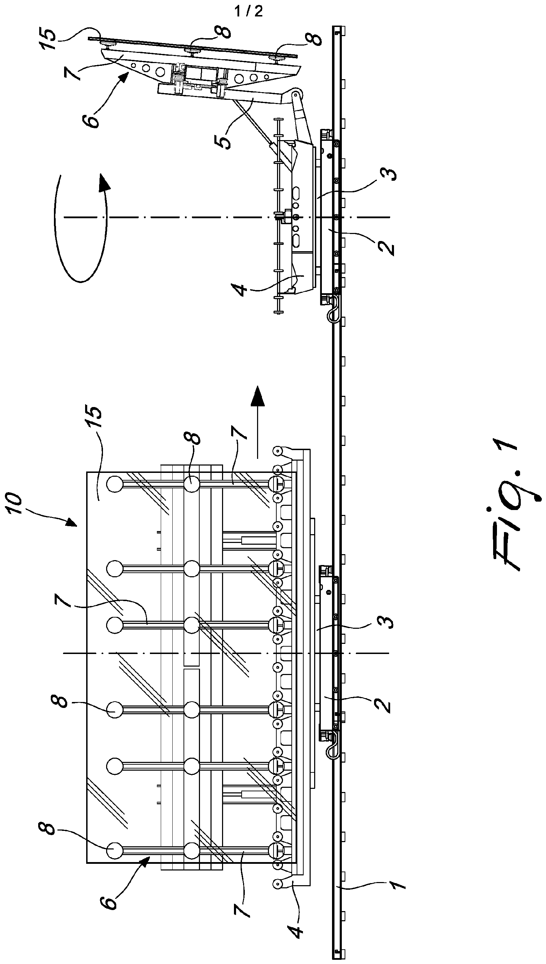

Figure 1 is a lateral elevation view of the loading and feeding machine according to the present invention, in two operating configurations;

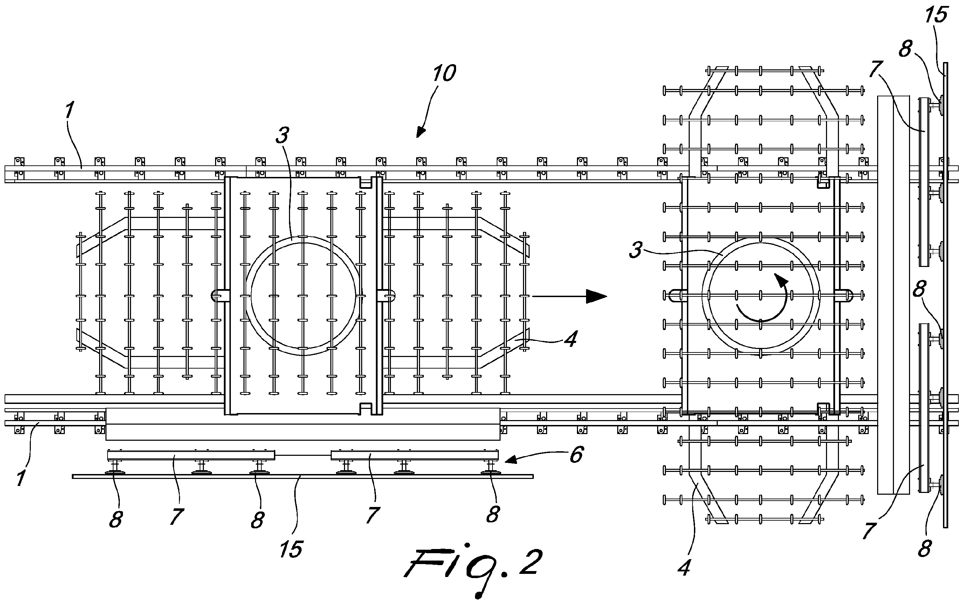

Figure 2 is a top plan view of the loading and feeding machine according to the invention in the two operating positions of Figure 1.

With reference to the figures, the loading and feeding machine according to the invention, generally designated by the reference numeral 10, comprises a pair of tracks 1 arranged on the floor and adapted to allow the movement of the machine.

Furthermore, the machine comprises a footing 2 adapted to translate along an axis X along the tracks 1, with the axis X coinciding with the extension of the tracks.

A roller conveyor 4 for the transfer of the sheets is arranged in a position above the footing 2 and moves together with the footing 2.

A (bi-directional) lateral telescopic oscillating structure 5 is provided for the tilting of a glass sheet 15 from a vertical position to a substantially horizontal position and vice versa, and for its handling in a cantilever arrangement with respect to the footing 2 of the machine.

Essentially, the telescopic oscillating structure 5 allows tilting the sheet 15 from the vertical position to the horizontal position and to handle it in order to carry it to the cutting assembly (not shown).

The telescopic oscillating structure, in order to tilt and handle the sheet 15, comprises grip means 6 conveniently constituted for example by arms 7 with suckers 8 connected to vacuum generation means.

Conveniently, between the footing 2 for translation along the axis X and the roller conveyor 4 for the transfer of the sheet 15 there are rotation means 3 adapted to allow a rotation of the roller conveyor 4 with respect to the footing 2 so as to bring the roller conveyor 4 in4to a position at right angles to the tracks 1, or in any other angular position, different from the position at right angles.

Conveniently, the lateral telescopic oscillating structure 5 can comprise an arm with an extractable portion which is arranged above or below said arm, or centrally with respect to the arm.

The machine according to the invention allows therefore an optimization of the assigned ground spaces of the sheet containment warehouse, without occupying additional areas for the arrangement of the machine body, since it is rotated, and therefore is always within the volumes already used for the translation of the machine.

Moreover, the machine according to the invention increases the possibility to develop systems on multiple spans by virtue of the reduction of the machine volume due to the rotation thereof about the footing.

Furthermore, it is possible to transfer the glass sheet 15 on one or more cutting lines having any work direction, since the rotation of the roller conveyor 4 with respect to the footing 2 is not limited to bringing the roller conveyor 4 to a position at right angles to the footing, and therefore the sheet 15 into a position at right angles to the direction of the axis X, but can be oriented according to any desired orientation.

In practice it has been found that the machine according to the invention fully achieves the intended aim and objects, since it makes it possible to combine in a single machine the loading and feeding of a glass sheet, with reduced volumes and the possibility to feed cutting assemblies arranged in any position with respect to the handling direction of said machine, i.e., with respect to the extension of the tracks on which the machine moves.

The machine thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application No. 102020000024670 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A loading and feeding machine (10), particularly for glass sheets and the like, comprising a pair of tracks (1) adapted to be arranged on the floor for the translation of the machine, a footing (2) adapted to translate along an axis that coincides with the tracks (1) and provided with a roller conveyor (4) for the transfer of a sheet (15); and a lateral telescopic oscillating structure (5), provided with sheet grip means, **characterized in that** it comprises rotation means (3) interposed between the footing (2) and the roller conveyor (4) and adapted to allow a rotation of the roller conveyor (4) with respect to the footing (2) according to any angular orientation.

2. The machine according to claim 1, **characterized in that** said grip means (6) comprise arms (7) with suckers (8).

3. The machine according to claim 1 or 2, **characterized in that** said rotation means (3) allow a rotation of said roller conveyor (4) for the transfer of a sheet (15) according to a desired orientation with respect to said tracks (1) along which said footing (2) translates.

4. The machine according to one or more of the preceding claims, **characterized in that** said lateral telescopic oscillating structure (5) is of the bidirectional type.

5. The machine according to one or more of the preceding claims, **characterized in that** the lateral telescopic oscillating structure (5) comprises an arm with an extractable portion which is arranged above said arm.

6. The machine according to one or more of the preceding claims, **characterized in that** said lateral telescopic oscillating structure (5) comprises an arm with an extractable portion which is arranged below said arm.

7. The machine according to one or more of the preceding claims, **characterized in that** said lateral telescopic oscillating structure (5) comprises an arm with an extractable portion which is arranged centrally with respect to said arm.

8. The machine according to one or more of the preceding claims, **characterized in that** said grip means (6) comprise vacuum generation means.
